Europäisches Patentamt

European Patent Office

Office européen des brevets

(11) Publication number : **0 522 797 A2**

(12) # EUROPEAN PATENT APPLICATION

(21) Application number : **92306129.5**

(22) Date of filing : **02.07.92**

(51) Int. Cl.$^5$ : **H04J 3/07**

(30) Priority : **08.07.91 US 727033**

(43) Date of publication of application :
**13.01.93 Bulletin 93/02**

(84) Designated Contracting States :
**BE DE FR GB NL SE**

(71) Applicant : **AT&T NETWORK SYSTEMS
INTERNATIONAL B.V.
Larenseweg 50
NL-1200 BD Hilversum (NL)**

(72) Inventor : **Bernardy, Edmond
Avenue Emile Bossaert, 54
B-1080 Brussels (BE)**

(74) Representative : **Buckley, Christopher Simon
Thirsk et al
AT&T (UK) Ltd. 5 Mornington Road
Woodford Green Essex IG8 OTU (GB)**

(54) **Synchronous digital signal to asynchronous digital signal desynchronizer.**

(57) Improved jitter performance is realized in a desynchronizer for obtaining an asynchronous signal, e.g., a CEPT-4 signal, from a received synchronous signal, e.g. a SDH STM-1 signal. The improved jitter performance results from employing a unique gap generator (103) which causes gaps in a received data signal to be spread regularly in time, and allows for almost continuous control by numerical techniques of the phase of a smooth output clock being generated. Phase control is obtained by employing a filtered version of the difference between the actual number of data bits in the received digital signal and the expected nominal number.

FIG.1

EP 0 522 797 A2

## Technical Field

This invention relates to digital transmission systems and, more particularly, to converting synchronous digital signals to asynchronous digital signals.

## Background of the Invention

Prior desynchronizer techniques and arrangements for converting synchronous digital transmission signals to asynchronous digital transmission signals are known. In recent digital transmission systems it has become important to smooth large gaps in a supplied data signal resulting from overhead bit and stuff bit removal. This is particularly important, for example, in converting a Synchronous Digital Hierarchy (SDH) STM-1 155.520 Mb/s synchronous digital signal to a CEPT-4 139.264 Mb/s asynchronous digital signal.

As is known, overhead bit removal from the SDH STM-1 signal results in relatively high jitter components. Additionally, it is also known that so-called pointer adjustments are used to reconcile phase and frequency differences between a clock signal derived from an incoming STM-1 signal and a local clock signal. These pointer adjustments are made on a byte-wise basis and can be either positive or negative. For example, for the CEPT-4 application, three bytes are used for the pointer adjustments, i.e., for stuffing, while for the DS3 application one byte is employed. Dig normal system operation, the pointer adjustments occur relatively infrequently. This causes a low frequency, relatively large peak-to-peak jitter component in the derived clock. When the system operation is degraded, pointer adjustments may occur more often. Thus, a wide range of pointer adjustment rates is possible.

A so-called bit leaking technique in conjunction with a phase locked loop and a desynchronizing elastic store has been proposed in an attempt at smoothing gaps in a derived clock caused by the pointer adjustments in a SDH signal format. A bit leak is defined as one (1) bit of phase error being supplied to a phase locked loop. One of these techniques employs a bit-by-bit leaking adjustment so that a phase locked loop having a "wider" bandwidth may be employed in the desynchronizer. This bit-by-bit technique, however, does not adequately compensate for the full range of pointer adjustment rates which may occur. Attempts at compensating for the pointer adjustments employing adaptive bit leaking arrangements have also been proposed. However, to the best of my knowledge the proposed adaptive bit leaking arrangements still cause excessive low frequency jitter to occur in the asynchronous digital signal, e.g., the CEPT-4 signal, or just simply do not operate satisfactorily.

## Summary of the Invention

The problems associated with prior known desynchronizer arrangements are overcome, in accordance with the invention, by employing a unique gap generator arrangement which causes gaps in a received data signal to be spread regularly in time and, in conjunction with an arrangement for numerically controlling phase, allows for an almost continuous control of the phase of a smooth output clock being generated.

More specifically, the gap generator yields a "smooth" gapped output clock having a mean frequency related to the ratio of the asynchronous digital signal clock frequency to the synchronous digital signal clock frequency. The distribution of the gaps in the gapped output clock is regular in time, and is independent of the distribution of the gaps resulting from overhead bit removal. The jitter resulting from the overhead bit removal, known as "mapping jitter", is thereby eliminated.

In an embodiment of the invention, the exact instantaneous phase error of a received synchronous digital signal is continuously monitored and used to automatically generate a smooth output clock. The instantaneous phase error is representative of the difference between the actual number and nominal number of data bits of the received digital signal and is available in numerical form. Numerical techniques are advantageously employed to control phase of the output clock. This numerical control provides a well defined and readily predictable response of the desynchronizer to the irregularities in the received signal bit rate caused by the justification bits or by the pointer adjustments.

## Brief Description of the Drawing

In the Drawing:
FIG. 1 shows, in simplified block diagram form, a desynchronizer including an embodiment of the invention for converting a synchronous digital signal to an asynchronous digital signal; and
FIG. 2 shows in simplified form, a function diagram of the digital filter employed in the embodiment of FIG. 1.

## Detailed Description

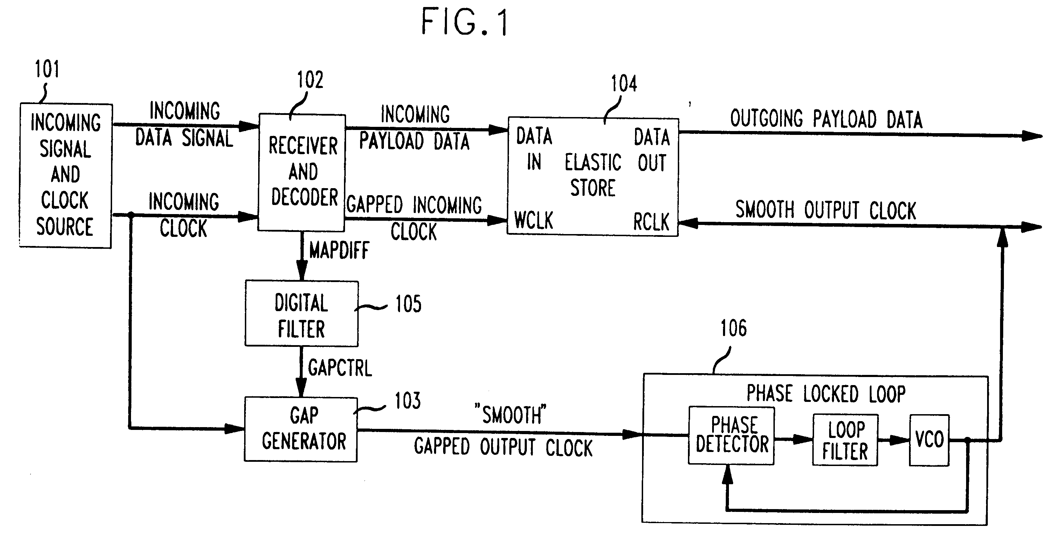

Shown in the FIG. 1 is incoming signal and clock source 101 which supplies as outputs an incoming synchronous digital signal and its associated clock. In one example, the incoming digital signal is the STM-1 Synchronous Digital Hierarchy (SDH) signal and the incoming clock is the STM-1 clock of 155.520 MHz. Details of the STM-1 SDH signal format are described in CCITT Recommendation G.707, G.708 and G.709 entitled "Synchronous Digital Hierarchy Bit Rates", "Network Node Interface For The Synchronous Digital Hierarchy" and Synchronous Multiplexing Structure", respectively. The mapping of the 139.264 Mb/s CEPT-4 digital signal into an SDH signal format is specified in the above noted CCITT Recommendation G.709, section 5.1.1.

The incoming STM-1 data signal and its associated STM-1 clock are supplied to receiver and decoder 102. The STM-1 clock is also supplied to gap generator 103. Receiver and decoder 102 is employed, in this example, to convert the STM-1 data signal into a gapped CEPT-4 digital data signal and to convert the STM-1 clock into a gapped incoming clock. The gapped data signal denoted "incoming payload data" is written into elastic store 104 at the gapped incoming clock rate. As is known, the gapped incoming clock only has clock pulses at the positions in the signal format corresponding to data bits since the overhead bits and stuffing bits have been removed. As explained below, the output payload data is read from elastic store 104 at the smooth output clock rate. In this example, the nominal smooth output clock rate is 139.264 MHz.

Gap generator 103 is supplied with the incoming signal clock and is responsive to GAPCTRL from digital filter 105 to generate a "smooth" gapped output clock. The smooth gapped output clock is supplied to phase locked loop (PLL) 106 which, in turn, yields the desired smooth output clock. In the CEPT-4 application, phase locked loop 106 is an analog PLL which is needed to filter the residual high frequency jitter of the smooth output gapped clock and to filter the jitter of the incoming STM-1 clock. In other applications, for example, for a DS1 digital signal, use of an analog phase locked loop may not be necessary. The smooth output clock from phase locked loop 106 is supplied to a read clock input of elastic store 104 and as an output from the desynchronizer unit.

Gap generator 103 operates by keeping track of the instantaneous phase difference between the output clock actually being generated and an ideal, smooth target output clock.

Let the ratio of the nominal smooth output clock to the incoming clock be $\frac{N-K}{N}$, where N and K are relative prime numbers. Then, under nominal conditions the phase of the desired smooth output clock should increase by $\frac{N-K}{N}$ cycles for every cycle of the incoming clock. An incoming clock pulse is either passed through or blocked by gap generator 103. If an incoming clock pulse is passed through, the output phase increases by one (1) cycle and, thus, introduces a phase error of $+\frac{K}{N}$ cycles, while a blocked pulse (= gap) creates a phase error of $-1+\frac{K}{N}$ cycles.

In the STM-1/CEPT-4 example, the incoming STM-1 clock is 155.520 MHz and the desired smooth output CEPT-4 clock is 139.264 MHz. Thus, the ratio is $\frac{139264}{155520} = \frac{1088}{1215} = \frac{1215-127}{1215}$ and therefore, N=1215, K=127. Accordingly, under "normal" conditions the desired smooth gapped output clock generated by gap generator 103 should have 1088 cycles for 1215 cycles of the incoming clock. Consequently, K=127 gaps must be generated for each N=1215 cycles of the incoming clock.

In order to spread the gaps regularly in time gap generator 103 keeps track of the instantaneous phase difference, called PH_ERR hereafter, between the generated output clock and the ideal target output clock, and produces pulses or gaps in the generated output clock according to the value of the phase error. PH_ERR is computed in units of 1/N cycle, ensuring that the accumulated phase error is tracked without roundoff error.

The operation of gap generator 103 can be described as follows:
reset PH_ERR to zero;
for each input clock cycle do:
      if PH_ERR is positive or zero then
          {disable output clock pulse; (--> generate gap)
          decrement PH_ERR by N-K}
      else
          {enable output clock pulse; (--> generate pulse)
          increment PH_ERR by K}

The process described above provides a gapped output clock having a phase value that tracks as closely as possible the phase of the ideal continuous target clock. The process also provides a means to control the phase of the generated clock with a very high resolution. Changing the value of PH_ERR changes the phase of the target clock, and thereby the phase of the generated output clock. PH_ERR accumulates the phase error in units of 1/N cycle. Adding the value of GAPCTRL produced by digital filter 105 to PH_ERR changes the phase of the ideal target clock by GAPCTRL/N cycles. It is noted that the value of GAPCTRL can be either positive or negative and, therefore, will provide either a delay or advance, respectively, of the generated clock.

The basic gap generating procedure described above can be modified to obtain a lower repetition rate of the required arithmetic operations. In the CEPT-4 example the ratio of present clock pulses to gaps is $\frac{1088}{127} = 8.567$. The phase error can therefore be computed every 8 incoming clock cycles instead of each clock cycle, and a one cycle gap created when necessary, namely:

    if PH_ERR is positive or zero then
        {disable output clock pulse; (--> generate gap)
        decrement PH_ERR by N-8K (199)}
    else
        {enable output clock pulse; (--> generate pulse)
        increment PH-ERR by 8K (1016)}

The phase of the generated output clock can again be adjusted by adding the value of GAPCTRL from digital filter 105 to PH_ERR.

Although the above embodiment of the invention can be employed in many applications, it may be advantageous to employ a slightly different arrangement for applications in which the data rate is much lower than the incoming signal clock rate. One example, is a desynchronizer for recovering a DS1 digital signal from a STS-1 SONET signal. As is known, the STS-1 clock is 51.840 MHz and the DS1 rate is 1.544 Mb/sec. Thus, in this example, $\frac{N-K}{N} = \frac{1544}{51840} = \frac{193}{6480} = \frac{6480-6287}{6480}$. The embodiment of the invention described above generates a clock pulse after either 32 or 33 gaps. A group of 32 gaps and one clock pulse yields a phase error of +111, while a group of 33 gaps and one clock pulse yields a phase error of -82. The phase error is again computed in units of 1/N or in this example, 1/6480 cycle. The desired sequence can be generated by a counter which is controllably programmed to divide the incoming clock by either a divisor value of 33 or a divisor value of 34 using the following:

$$\text{INITIALIZE: PH\_ERR} = 0$$

BEGIN:      wait for divide to complete

                if PH-ERR > 0 then

                    divide = 34

                    PH_ERR = PH_ERR - 82

                else

                    divide = 33

                    PH_ERR = PH_ERR + 111

                goto BEGIN

This procedure constrains the length of the output clock period to be either 33 or 34 cycles of the incoming clock, and phase locked loop 106 will not be needed in most such applications.

The phase of the generated output clock can again be adjusted by adding the value of GAPCTRL from digital filter 105 to PH_ERR.

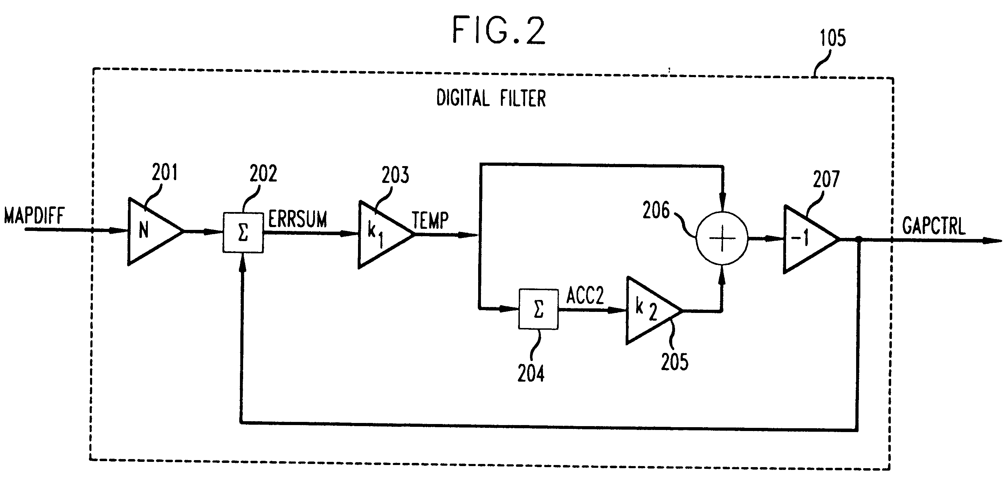

The primary purpose of digital filter 105 is to provide smoothing of the phase variations of the incoming clock caused by pointer adjustments or justification bits. A secondary function of digital filter 105 is to provide control of the filling and "centering" of elastic store 104. Accordingly , FIG. 2 shows, in simplified form, a functional diagram of digital filter 105.

Receiver and decoder 102 generates at regular time intervals T a number denoted MAPDIFF. MAPDIFF is representative of the difference between the actual number of data bits received in interval T and the expected nominal number of bits. Interval T can be, for example, the STM-1 frame interval (125 μs), i.e., a fixed portion of the received digital signal. MAPDIFF is readily obtained by counting the actual incoming data bits and comparing the result to the expected nominal number of data bits per frame. Under nominal conditions, each STM-1 frame includes a fixed predetermined number of data bits. For a CEPT-4 application, each STM-1 frame nominally includes 17,408 CEPT-4 data bits. Because of bit justifications and pointer adjustments, the actual number of data bits differs from the nominal number, the difference being the computed MAPDIFF.

As shown in FIG. 2, the MAPDIFF value from receiver and decoder 102 is multiplied via 201 by the constant factor N, in this example N=1215, and the result is added to GAPCTRL in accumulator 202 to obtain ERRSUM. ERRSUM is multiplied by constant $k_1$ via 203 to obtain TEMP which is supplied to one input of adder 206. TEMP is also supplied to accumulator 204 and added to ACC2. In turn, ACC2 is multiplied by constant $k_2$ via 205 and the result is supplied to another input of adder 206. The output of adder 206 is inverted via 207 to yield GAPCTRL. It is noted that because of the sign reversal in digital filter 105, ERRSUM equals the difference between the phase of the write and read clocks supplied to elastic store 104, i.e., the filling of elastic store 104, in units of 1/N bits. Both N∗MAPDIFF and GAPCTRL are integer numbers and their sum ERRSUM is computed without roundoff error.

The sequence of operations performed by digital filter 105 can be described as follows:

ERRSUM = ERRSUM + N ∗ MAPDIFF

TEMP = $k_1$∗ERRSUM

ACC2 = ACC2 + TEMP

GAPCTRL = -(TEMP + $k_2$∗ACC2)

ERRSUM = ERRSUM + GAPCTRL

The system function of digital filter 105, in this example, is a low pass function and is as follows, $H(z) = -Nz\dfrac{k_1(1 + k_2)z - k_1}{(z - 1)^2 + k_1(1 + k_2)z - k_1}$.

The corresponding Laplace transform for the low frequency response is

$$H(s) = -N\frac{2\zeta\omega_0 s + \omega^2{}_0}{s^2 + 2\zeta\omega_0 s + \omega^2{}_0}, \text{ with } \omega_0 = \frac{\sqrt{k_1 k_2}}{T}, \zeta = \frac{1 + k_2}{2}\sqrt{\frac{k_1}{k_2}},$$

which is the response of a standard high gain second order phase locked loop. The dynamic response of the digital filter is thereby completely defined. It is basically a low-pass filter with a 3 dB cut-off frequency $f_{3dB} \approx \dfrac{k_1}{2\pi T}$. The bandwidth of the filter is chosen to meet the output jitter requirements.

As is known from phase locked loop theory, the second order phase locked loop provides zero phase error for a constant frequency error input. In the present application this property provides centering of the elastic store for regularly recurring pointer adjustments, i.e., degraded mode.

In order to simplify the arithmetic operations, integer powers of 2 can generally be chosen for filter coefficients $k_1$ and $k_2$. For example, employing $k_1 = 2^{-10}$ and $k_2 = 2^{-16}$ with a sampling period T of 125 μs yields a filter 3dB bandwidth of 1.26 Hz and a damping factor of 4, which are suitable for the STM-1/CEPT-4 application.

**Claims**

1. An apparatus for desynchronizing an incoming digital signal at an incoming digital clock rate to obtain an outgoing digital signal at an output digital clock rate different from the incoming digital clock rate, including:

   a source of an incoming digital signal and an associated incoming clock;

   means for obtaining a gapped data signal from said incoming digital signal;

   means for obtaining a gapped incoming clock from said incoming clock; and elastic store means supplied with said gapped data signal, said gapped incoming clock and an output clolck for supplyuing as an output a smooth outgoing data signal at said output clock;

   the apparatus being CHARACTERIZED BY

   means for generating a control signal related to the actual number of payload data bits in a predetermined portion of said incoming digital signal;

   means supplied with said incoming clock and being responsive to said control signal for generating said output clock.

2. The apparatus as defined in claim 1 CHARACTERIZED IN THAT said means for generating said control signal includes means for generating a representation of the difference between an actual number and a nominal expected number of payload data bits in a fixed portion of said incoming digital signal.

3. The apparatus as defined in claim 2 CHARACTERIZED IN THAT said means for generating said control signal further includes low pass filter means for obtaining a filtered version of said difference representation, said filtered version being said control signal.

4. The apparatus as defined in claim 3 CHARACTERIZED IN THAT said control signal is a numerical representation of said filtered version of said difference representation.

5. The apparatus as defined in claim 4 CHARACTERIZED IN THAT said means for generating said output clock includes means responsive to said numerical representation and to said incoming clock for generating a gapped output clock.

6. The apparatus as defined in claim 5 CHARACTERIZED IN THAT said means for generating said output clock further includes a phase locked loop supplied with said gapped output clock.

7. The apparatus as defined in claim 6 CHARACTERIZED IN THAT said phase locked loop is an analog phase locked loop.

8. The apparatus as defined in claim 5 CHARACTERIZED IN THAT said means for generating said gapped output clock includes means for controllably adjusting a phase error value of said generated gapped output clock by algebraically adding said numerical representation to said phase error value.

9. The apparatus as defined in claim 1 CHARACTERIZED IN THAT said means for generating said output clock includes means for controllably enabling and disabling generation of an output clock pulse in response to a phase error value of said output clock, generation of an output clock pulse being disabled for first prescribed values of said phase error and being enabled otherwise, means for decrementing said phase error value by a first predetermined value upon disabling generation of an output clock pulse and means for incrementing said phase error value by a second predetermined value upon enabling generation of an output clock pulse.

10. The apparatus as defined in claim 9 CHARACTERIZED IN THAT said means for generating said output clock is responsive to each clock pulse of said incoming clock, said first predetermined value is N-K and said second predetermined value is K, where N is related to the incoming clock rate and K is related to a difference between the incoming clock rate and the output clock rate.

11. The apparatus as defined in claim 10 CHARACTERIZED IN THAT said means for generating said output clock further includes means for controllably adjusting said phase error value by algebraically adding a value of said control signal to said phase error value.

12. The apparatus as defined in claim 9 CHARACTERIZED IN THAT said means for generating said output clock is operative to evaluate said phase error value in response to every Xth clock pulse of said incoming clock, said first predetermined value is N-XK and said second predetermined value is XK, where N is related to the incoming clock rate and K is related to a difference between the incoming clock rate and the output clock rate.

13. The apparatus as defined in claim 12 CHARACTERIZED IN THAT said means for generating said output clock further includes means for controllably adjusting said phase error value by algebraically adding a value of said control signal to said phase error value.

14. The apparatus as defined in claim 1 CHARACTERIZED IN THAT said means for generating said output clock includes counter means which is controlled to divide said incoming clock by a first divisor value for first counter phase error values, to adjust the counter phase error by a first predetermined phase error value upon completion of a division by said first divisor value, to divide said incoming clock by a second divisor value for counter phase error values other than said first counter phase error values and to adjust the counter phase error by a second predetermined phase error value upon completion of a division by said second divisor value.

15. The apparatus as defined in claim 14 CHARACTERIZED IN THAT said means for generating said gapped output clock further includes means for controllably adjusting said phase error value by algebraically adding a value of said control signal to said phase error value.

FIG.1

# FIG.2

MAPDIFF → [N] 201 → [Σ] 202 →ERRSUM→ [k₁] 203 →TEMP→ [Σ] 204 →ACC2→ [k₂] 205 → 206 (+) → [-1] 207 → GAPCTRL

DIGITAL FILTER   105

EP 0 522 797 A2